(19) **Europäisches Patentamt / European Patent Office / Office européen des brevets**

(11) **EP 1 410 889 B1**

(12) **EUROPEAN PATENT SPECIFICATION**

(45) Date of publication and mention
of the grant of the patent:
**02.07.2008 Bulletin 2008/27**

(21) Application number: **02747670.4**

(22) Date of filing: **15.07.2002**

(51) Int Cl.:
***B29C 39/10*** *(2006.01)*    ***B29C 39/12*** *(2006.01)*
***G02B 3/00*** *(2006.01)*    ***B29L 11/00*** *(2006.01)*
***B29D 11/00*** *(2006.01)*

(86) International application number:
**PCT/JP2002/007179**

(87) International publication number:
**WO 2003/008171 (30.01.2003 Gazette 2003/05)**

(54) **METHOD OF PRODUCING RESIN LENSES**

VERFAHREN ZUR HERSTELLUNG VON HARZLINSEN

METHODE DE PRODUCTION D'UNE LENTILLE DE RESINE

(84) Designated Contracting States:
**DE FR GB IT**

(30) Priority: **16.07.2001 JP 2001215648**

(43) Date of publication of application:
**21.04.2004 Bulletin 2004/17**

(73) Proprietor: **ASAHI LITE OPTICAL CO., LTD.**
**Fukui-shi,**
**Fukui 910-0004 (JP)**

(72) Inventors:
• **ONO, Kotaro**
**Fukui-shi, Fukui 910-0024 (JP)**

• **KAGEI, Kazunori,**
**c/o Asahi Lite Optical Co., Ltd.**
**Fukui-shi, Fukui 910-0004 (JP)**

(74) Representative: **Strehl Schübel-Hopf & Partner**
**Maximilianstrasse 54**
**80538 München (DE)**

(56) References cited:
EP-A1- 0 726 138    JP-A- 6 337 376
JP-A- 7 028 002    JP-A- 8 244 043
JP-A- 61 220 811    JP-A- 61 272 112
US-A- 4 383 672

**Description**

TECHNICAL FIELD

The present invention relates to a method for producing resin lenses, and to the lenses. Precisely, the invention relates to resin lenses that are produced by molding at least two materials, and are inexpensive and have good chemical and physical properties.

BACKGROUND ART

Resin lenses are generally produced by casting a flowable optical resin into a mold followed by curing it therein, and they are formed of one type of optical resin. As compared with glass, optical resin is lightweight and has good tintability, impact resistance and mechanical workability. However, resin with good optical properties could not always have good other properties. Accordingly, in developing resins for optical use, efforts are made to improve the properties of resins for lenses in good balance, but one type of resin could not satisfy all the requirements. For example, hard resin is often brittle and its machinability is not good. On the other hand, some resin, though having a high refractive index, may undergo chromatic aberration and therefore may be unfashionable since its Abbe's number is low and its tintability is not good. Some other resin has good impact resistance but has poor scratch resistance. To that effect, resins have their merits and demerits. To cover up such faults, it may be taken into consideration to stick two lenses into a two-layered structure. However, much labor will be taken for adjusting the optical axes and the curved surfaces to be bonded of the two lenses, and it will increase the production costs.

On the other hand, a technique of laminating thin resin films having various effects and advantages into a laminate structure has heretofore been carried out for increasing the added value of resin lenses. For example, a base lens is coated with a hard coat layer for improving its scratch resistance of the coated lenses, or is coated with a photochromic layer. Prior art references relating to the present invention are JP-A 60-205401, JP-A 8-216271 and EP-A-726 138. The former discloses a technique of casting a resin onto a glass lens that has been previously injection-molded to thereby integrally mold a aspherical lens. However, this technique is not for covering up the optical or chemical drawbacks of glass lenses themselves but for changing the shape of lenses to thereby enhance the mass-producibility of lenses. The latter discloses a technique of previously molding a resin lens, removing one mold from it, forming a cavity on one side of the lens, casting a photochromic material into the cavity, and integrally molding it to thereby form a photochromic layer on one side of the resin lens. From these related techniques, it is considered that a method of forming a cavity on one face of a molded article, casting a different resin into the cavity and integrally molding it is known. However, these techniques are based on the assumption that the properties of the substrate lens are utilized directly as they are. An idea of combining two or more different resin materials having different properties for covering up the drawbacks of the substrate lenses that are formed of the thus-combined resin materials is not shown in any reference.

As opposed to the above, one object of the present invention is to cover up the drawbacks of optical resin to thereby improve the optical properties and also the physical and chemical properties of the resin lenses.

DISCLOSURE OF THE INVENTION

The object is met by the method defined in the appended claims.

The present invention is based on the inventors' finding that monomer can airtightly bond to a shaped body while it is polymerized into polymer not using an adhesive or a coupling agent. In this description, this is referred to as "polymerization bonding".

The step of "processing at least one resin material into anon-flowable shapedbody" means as follows: Since the starting monomer for the resin material or the melt of the resin material is naturally flowable and therefore does not have a stable shape, it is first heated, or exposed to light rays (electromagnetic waves) such as UV rays or IR rays, or cured so that it is shaped into a desired shape. The shape of the shaped body varies depending on its use. As it is, the shaped body may not have the properties of finished lens, and it may be referred to as "intermediate". The shaped body may include films and the like having particular optical properties.

The molded resin article that is fabricated by applying a different resin monomer to the shaped body followed by integrally bonding the two may be directly used as a finished lens as it is, but it may be a half-finished lens that is further worked, for example, ground, polished or cut into a finished lens.

In the invention, materials having different properties as above are combined and integrated to give a lens of which the different properties of the materials are complementary to each other. Selecting the resins is not limited to the above, and any materials capable of undergoing polymerization bonding together may be selected and combined for use herein.

In the case of combining easily-tintable resin and hardly-tintable resin, the easily-tintable resin is essentially dyed and the lens is thereby colored. Concretely, an easily-tintable resin is applied to one face of a shaped body of a hardly-tintable resin in a mode of polymerization bonding to fabricate a part of a lens, and this is colored. Thus colored, the hardly-tintable resin part of the lens may look colored. Some optical resin of high refractivity is hardly tintable. For example, an episulfido group-having sulfur-containing resin has a refractive index of 1.74, or that is, its refractive index is the height of all known at present in the art. However, its dyeability is poor. The present invention may cover up the drawback of the high-refractivity optical resin, therefore realizing colored lenses of the resin with ease.

In the case of combining resin readily having faults of burrs and cracks in machining and resin not readily having them, the invention makes it possible to eliminate the drawbacks in machining the lenses formed of the combined resins. Specifically, hard resin lenses may be readily cracked when they are fitted into frames of glasses, and, in addition, they have another problem in that; when they are fitted into two-point frames of glasses in which both the bridge and the temples are directly screwed to the lenses, then the lenses may be burred or cracked when they are drilled for screws. These problems may be solved by forming a thin layer of an optical resin of good machinability on at least one face of the intermediate as a part of the lens from the intermediate. Concretely, the part that is formed for that purpose may be the front or back face of the lens or the periphery around the area to be drilled.

In the case of combining resin of high impact resistance and resin of low impact resistance, the weakness of the resin material of low impact resistance may be covered up and lenses of high impact resistance can be obtained. Resin lenses of high refractivity are generally not resistant to shock. For example, the high-refractivity episulfide resin having a refractive index of 1.74 is not resistant to shock, and when lenses formed of it are tested in an FDA steel ball dropping test, they could not over 4 times the standard level. In the present invention, a thin resin layer of high impact resistance is bonded to a lens body in a mode of polymerization bonding, and the thus-laminated lens may pass the 4-time level in the FDA test even though, its center thickness is not intentionally increased.

In the case of combining resin of high refractivity and resin of low refractivity, a low-refractivity optical resin of the two may be disposed on the side of a lens that is exposed to air, whereby the surface reflectance of the lens maybe reduced and the light transmittance through the lens may be increased. The surface reflectance R may be represented by the following Fresnel formula:

$$R = \{(n_g - n_o)/(n_g + n_o)\}^2$$

wherein $n_g$ indicates the refractive index of the substrate, and no indicates the refractive index of air. This reflectance may apply also to the interface of two optical substances. For example, when two optical resins, one having a refractive index of 1.5 to be an intermediate and the other having a refractive index of 1.74 to be integrally molded on the intermediate, are formed into a lens, then the total of the reflectance on the side thereof exposed to air and that on the interface of the two resins thereof is 4 + 0.55 = 4.55 (%). On the other hand, when only the optical resin having a refractive index of 1.74 is formed into a lens, then the surface reflectance of the lens is 7.3 (%). This means that the surface reflectance of the former lens is lower by 2.75 (%) than that of the latter lens.

In the combination of resin of high refractivity and resin of low refractivity, when the optical resin having a low refractive index is disposed on the side of a lens that is exposed to air, then interference fringes are prevented from occurring in the lens. In general, resin lenses are readily scratched and are therefore coated with a hard coat layer to improve their scratch resistance, and the thickness of the thus-coated resin lenses is from 1 to 2 $\mu$m or so. If too thick, the lenses may be more readily cracked or peeled owing to their volume expansion. Accordingly, the reflected light on the surface of the hard coat layer and that on the lens surface may interfere with each other to form interference fringes, and the commercial value of the lenses is thereby extremely lowered. This phenomenon would not be so much when the refractive index of the substance for the hard coat layer is near to that of the resin for the lens, but the interference fringes would be remarkable when the difference in the refractive index between the two is large. Regarding the refractive index of hard coats, efforts are made to increase the mean refractive index thereof by adding fine particles of high refractivity thereto. However, if the particles are added too much, then the adhesiveness of the hard coat layer to resin lenses will lower and the coated lenses will be readily cracked in temperature change around them. Therefore, the refractive index of the hard coat layer would be at most 1.5 to 1.6 or so, and if the refractive index of the resin for lenses is higher than 1.7, then the lenses coated with the hard coat layer would have strong interference fringes. When a resin having a lower refractive index is disposed on and integrated with the surface of the high-refractivity lens, then this phenomenon could be evaded. properties.

In still another embodiment of the invention, either one or both of an organic thin film of good abrasion resistance and an antireflective thin film are formed on one or both outer surfaces of the resin lens produced according to the method mentioned above. Depending on the combination of the optical materials used, the surface refractivity of the lens itself may be reduced and, in addition, since an antireflection layer is formed on the surface of the lens that is kept in contact with air, the transmittance of the lens may be increased. For forming the organic thin film of good abrasion resistance, employable is any ordinary method. For it, for example, an urethane resin with inorganic fine particles dispersed therein may be applied to the lens in a mode of dipping or spin coating to form a layer having a thickness of from 1 to 2 $\mu$m followed by thermally curing it; or a UV-curable resin such as acrylic resin may be used for the film. For, forming the antireflective thin film, also employable is any ordinary method. For it, for example, a multi-layered thin metal film may be formed through sputtering.

According to the method of the invention mentioned above, those having desirable properties may be selected from various optical resins and may be integrated into lenses, and the workability of the lenses is bettered. Thus, the invention makes it possible to provide high-quality lenses at low costs.

BRIEF DESCRIPTION OF THE DRAWINGS

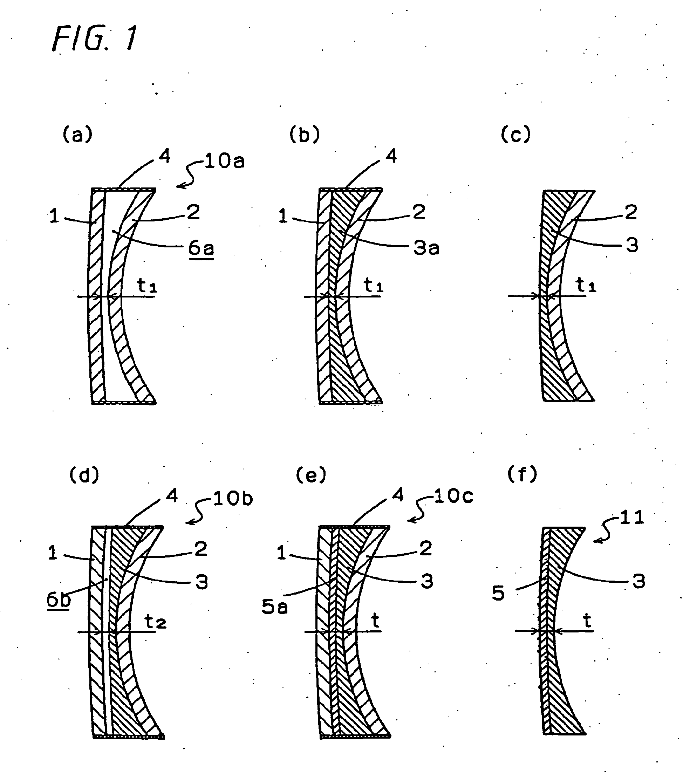

Fig. 1(a) is a cross-sectional view of a shell; (b) is a cross-sectional view of the shell filled with a resin; (c) is a cross-sectional view of an intermediate; (d) is a cross-sectional view with a cavity provided therein, a cross-sectional view of the cavity filled with a different resin; (e) is a cross-sectional view of the cavity filled with a resin that differ from that for the intermediate; and (f) is a cross-sectional view of a resin lens of the invention.

[Description of Numeral References]

1  Female Mold
2  Male Mold
3  Intermediate
4  Adhesive Tape
10  Shell
11  Polymerization-bonded Lens

BEST MODES OF CARRYING OUT THE INVENTION

The mode of polymerization bonding in the embodiments of the invention is described with reference to Fig. 1. Fig. 1(a) is a cross-sectional view of a shell. A female mold 1 and a male mold 2 are combined to have a center gap of $t_1$, and sealed up with an adhesive tape 4 at their peripheries to form a cavity 6a to thereby construct the shell 10a. Next, as in Fig. 1(b), the adhesive tape is partly peeled and a resin 3a is filled into the cavity, and the shell is again sealed up and the resin therein is processed for thermal polymerization. Then, the resin 3a is gradually cooled and cured. The cured resin 3a forms an intermediate 3. Fig. 1 (c) is a cross-sectional view, in which the mold 1 is removed and the mold 2 is stuck to the intermediate 3. Fig. 1 (d) is a cross-sectional view of a shell 10b, in which the released mold 1 is again attached to the intermediate 3 via a center gap therebetween of $t_2$, and sealed up with an adhesive tape to form a cavity 6b. Fig. 1(e) is a cross-sectional view of a shell 10c with another resin 5a filled in the cavity 6b. In this, the resin 5a is thermally polymerized and cured into a resin 5 that bonds to the intermediate 3 in amode of polymerization bonding. Fig. 1 (f) is a cross-sectional view of a polymerization-bonded lens 11 of the invention, which is obtained by removing the molds 1 and 2. The intermediate 3 and the additional resin 5 are integrated together to form a lens having a center thickness of t.

Various embodiments of the invention are described hereinunder. Even though not illustrated by way of drawings, lenses can be fabricated in the same manner as above. Except those called by their trade names, the resinmaterials (monomers) used herein are all commercial products of Mitsui Chemical.

[Example 1]

This is to demonstrate an example of fabricating a resin lens in a mode of polymerization bonding of an easily-tintable lens material to a hardly-tintable lens material.

A combined glass mold (hereinafter referred to as "mold") having a diameter of 80 mm to give a diopter of 7.00 was prepared, and sealed up with an adhesive tape at the periphery thereof to have a center gap of 1.2 mm or 0.6 mm. Two pairs of shells were thus constructed. A catalyst-mixed monomer for episulfide resin (HIE, having a refractive index of 1.74) was filled into the cavity of each shell, and thermally polymerized therein. The mold was removed from the shell having a center gap of 1.2 mm, and an episulfide resin lens of -7.00 D was obtained. In the other shell having a center gap of 0.6 mm, only the male mold was removed but the female mold was kept still as such. Next, the removed male mold was again applied to the convex face of the intermediate to have a uniform gap therebetween of 0.6 mm, and again sealed up with an adhesive tape at the periphery thereof to form a cavity. Then, a catalyst-mixed monomer for urethane resin (MR-7, having a refractive index of 1.67) was filled into the cavity and thermally polymerized, and then both the male mold and the female mold were removed. Thus fabricated, the lens had a uniform 0.6 mm-thick urethane resin layer formed on the convex face of the intermediate in a mode of polymerization bonding, and its center thickness was 1.2 mm.

The above two lenses were dipped in a dyeing bath at 90°C for 5 minutes. As a result, the episulfide resin lens was not dyed at all, and its color density was 0%. In the polymerization-bonded lens of urethane resin and episulfide resin, the intermediate of episulfide resin was not dyed but the 0.6 mm-thick urethane resin part was dyed. Measured with a spectrophotometer, the lens was dyed to have an overall color density of about 28 % as a whole.

As described above, even a resin lens formed of a hardly-tintable lens material can be modified into a tintable resin lens by bonding an easily-tintable lens material thereto in a mode of polymerization bonding, and, in addition, it is possible to fabricate lenses with no power change by bonding a layer of a different resin having a uniform thickness to the curved surface of a lens substrate in a mode of polymerization bonding. The polymerization bonding of a different material to a lens substrate is not limited to the convex face of the lens substrate but may also be to the concave face thereof. In this Example, the same mold was used while spaced from the intermediate by 0.6 mm, and strictly speaking, therefore, the urethane resi-npart could not be a layer having a uniform thickness. In this Example, however, in which a lens of -7.00 D having a radius of curvature of 600 mm is fabricated, the difference in question is 0.0013 mm at the peripheryof the lens havingadiameter of 80 mm, and this is within a negligible range.

[Example 2]

This is to demonstrate an example of modifying a resin lens into an easily-workable one by bonding an easily-machinable resin to a hardly-machinable resin material that is difficult to drill, in a mode of polymerization bonding.

In the same manner as in Example 1, an episulfide resin monomer (HIE) was formed into an intermediate having a center thickness of 0.6 mm; and also in the same manner as in Example 1, a 0.6 mm-thick layer of an easily-machinable urethane resin monomer (MR-7) was bonded to the convex face of the intermediate in a mode of polymerization bonding to construct a polymerization-bonded lens of episulfide resin and urethane resin.

In general, lenses for two-point frames are worked into predetermined shapes, and then drilled for screws at their peripheries. The polymerization-bonded lens fabricated in the above was not broken while drilled, and its drilled area was neither burred nor cracked. Good holes were formed in the lens. On the other hand, however, when the lens formed of episulfide resin alone was, after worked into a predetermined shape, drilled at the periphery thereof, it was cracked from the hole toward its edge and, in addition, its holes were burred. In this lens, good holes could not be formed.

As described above, when a hardly-machinable lens material is bonded to an easily-machinable lens material in a mode of polymerization bonding to construct polymerization-bonded lenses, then it reduces failures in machining the lenses and makes it possible to efficiently and accurately machine the lenses.

[Example 3]

This is to demonstrate an example of improving the impact resistance of a lens formed of a material of low impact resistance (in this Example, hard-coated or multi-coated lens) by bonding a material of high impact resistance thereto in a mode of polymerization bonding.

A female mold and a male mold were so combined that the cavity thus formed could have a center gap of 1.10 mm or 0.5 mm, and sealed up with an adhesive tape at their peripheries to construct a shell. Three shells were constructed in that manner. An episulfide resin monomer (HIE) was filled into the cavity of each shell, and thermally polymerized therein. After thus thermally polymerized therein, the three shells having a cavity center gap of 1.10 mm were split to remove the female and male molds. Thus fabricated, the episulfide resin lenses of - 6.00 D having a refractive index of 1. 74 had a center thickness of 1.12 mm, 1.16 mm or 1.17 mm. On the other hand, only the female mold was removed from the other three shells having a cavity center gap of 0.5 mm, and the intermediates thus formed still had the female mold stuck thereto. The center thickness of these lens substrates was 0.47 mm, 0.47 mm and 0.50 mm, respectively. Next, the removed female mold was again attached to the convex face of each intermediate to have a center gap therebetween of 0.6 mm, and again sealed up with an adhesive tape at the periphery thereof to form a cavity. Three shells were thus constructed. Then, a urethane resin monomer (MR-7) was filled into the cavity and thermally polymerized. After the thermal polymerization, both the male mold and the female mold were removed to obtain three polymerization-bonded lenses in which the urethane resin was bonded to the intermediate of episulfide resin in a mode of polymerization bonding. The center thickness of the polymerization-bonded lenses was 1.13 mm, 1.13 mm and 1.18. mm, respectively.

These 6 lenses were coated with an organic hard coat layer to make them resistant to scratching, and then further coated with a thin metal film for antireflection. Thus finished, the 6 lenses were tested according to an FDA-standard falling ball impact test. The result is given in Table 1.

[Table 1]

| Combination of Materials | | power | total center thickness | FDA 4-time test |
|---|---|---|---|---|
| Episulfide Resin | Urethane Resin | | | |
| HIE | MR-7 | | | |
| 0.47 mm | 0.66 mm | -6.00 D | 1.13 mm | star cracks formed in 2nd try |
| 0.49 mm | 0.64 mm | -6.00 D | 1.13 mm | star cracks formed in 1st try |
| 0.50 mm | 0.68 mm | -6.00 D | 1.18 mm | star cracks formed in 2nd try |
| 1.12 mm | 0 | -6.00 D | 1.12 mm | ball penetrated in 1st try |
| 1.16 mm | 0 | -6.00 D | 1.16 mm | ball penetrated in 2nd try |
| 1.17 mm | 0 | -6.00 D | 1.17 mm | ball penetrated in 2nd try |

As is obvious from the Table, the falling steel ball penetrated through the lenses formed of episulfide resin alone, in 1st or 2nd dry in the FDA-standard 4-time test. On the other hand, the polymerization-bonded lenses that had been fabricated by bonding an urethane resin layer of from 0.64 to 0.68 mm thick to the convex face of an intermediate of episulfide resin in a mode of polymerization bonding had star cracks formed in 1st or 2nd try in the same falling ball impact test, but the falling ball did not penetrate through them. As in this embodiment, when an urethane resin of good impact resistance is bonded to an episulfide resin of poor impact resistance in a mode of polymerization bonding, then high-refractivity resin lenses of good impact resistance can be fabricated.

The FDA-standard test is to test lenses as to whether or not they are broken when a 16.2 g steel ball is spontaneously dropped thereon from a height of 1.27 m (that is, as to whether or not the falling ball penetrates through the lens or the lens is broken into at least 2 pieces). When the lenses were broken, they are rejected; but when they had star cracks (that is, they were star-wise cracked), they are good. In the FDA 4-time test, the weight of the steel ball that is 16.2 g in the standard test is increased by 4 times to 64.8 g.

[Example 4]

This is to demonstrate an example of reducing the surface reflectance of lenses by bonding a low-refractivity resin material to an intermediate of a high-refractivity resin material in a mode of polymerization bonding.

Because of the properties of the material thereof, high-refractivity lenses are to have a high YI value through high-temperature polymerization and, in addition, since the amount of the UV absorbent to be added to their material for improving the UV absorbability of the lenses increase, the lenses fabricated after polymerization and curing are to have a further increased YI value (yellowness index). Moreover, with the increase in the refractive index of the materials for the lenses, the luminous transmittance of the lenses in a visible light range lowers since the surface reflectance of the materials increases. We, the present inventors have assiduously studied these problems and, as a result, have found, when a low-refractivity material is bonded to a high-refractivity material lens in a mode of polymerization bonding, then the YI value of the resulting lens may be lowered and, in addition, the luminous transmittance of the lens in a visible light range may also be increased. One example of this embodiment is given below.

A female mold and a male mold were sealed up with an adhesive tape at their peripheries to construct a shell having a center gap of 1.2 mm. In the same manner, other two shells were also fabricated but having a center gap of 0.5 mm. The following components were prepared and filled into the cavity of these three shells.

```
(a) Monomer:
thioepisulfide monomer (HIE-1)      90 parts
thiol monomer (HIE-2)               10 parts
(b) Polymerization Catalyst:
N,N-dimethylcyclohexylamine         0.04 parts
N,N-dicyclohexylmethylamine         0.1 parts
acetic anhydride                    0.08 parts
```

(continued)

(c) UV Absorbent:

Seesorb 704 (by Shipro Kasei)     3.0 parts

Thus filled, the shells were heated for polymerization. Then, the shell having a center gap of 1.2 mm was split to remove the female and male molds, and a high-refractivity lens (sample lens 1) having a center thickness of 1.17 mm and a refractive index of 1.74 was thus fabricated.

On the other hand, only the female mold was removed from the other shells having a center gap of 0.5 mm to obtain intermediates having a center thickness of 0.49 mm. These intermediates still had the male mold stuck thereto. Next, the removed female mold was again attached to the convex face of each intermediate to form a uniform center gap therebetween of 0.7 mm, and again sealed up with an adhesive around the molds. Thus, two shells with a cavity therein were constructed. The following components were prepared and filled into the cavity of one shell of these.

(d) Monomer:

polyisocyanate (MR-7A)     52 parts

polythiol (MR-7B)     48 parts

(e) Polymerization Catalyst:

dibutyltin dichloride     0.10 parts

(f) UV absorbent:

benzotriazole     1.5 parts

Thus filled, the shell was heated for polymerization, and the male and female glass molds were both removed to obtain a lens. In this lens, a 0.66 mm-thick layer of the optical material' having a refractive index of 1.67 was bonded to the convex face of the intermediate having a refractive index of 1.74 and having a center thickness of 0.49 mm in a mode of polymerization bonding. The lens is a high-refractivity lens (sample lens 2) having a center thickness of 1.15 mm.

The following components were prepared and filled into the cavity of still another shell that had been designed in the same manner as herein.

(a) Monomer:

polyisocyanate (MR-8A)     50.5 parts

polythiol (MR-8B)     49.5 parts

(b) Polymerization Catalyst:

dibutyltin dichloride     0.1 parts

(c) UV absorbent:

benzotriazole     1.5 parts

Thus filled, the shell was heated for polymerization, and the male and female molds were both removed to obtain a lens. In this lens, a 0.67 mm-thick layer of the optical material having a refractive index of 1.60 was bonded to the convex face of the intermediate having a refractive index of 1.74 and having a center thickness of 0.49 mm in a mode of polymerization bonding. The lens is a high-refractivity lens (sample lens 3) having a center thickness of 1.16 mm.

The properties of these sample lenses 1, 2 and 3 are shown in Table 2. The data are all those of the nude lenses not coated with any additional films such as hard coat film and antireflection film. A spectrophotometer (by Hitachi) was used for measuring the samples.

[Table 2]

| Sample Lens | Material Constitution and Layer Thickness of Lens | | | Total Center Thickness | UV Transmittance at 400 nm | Luminous Transmittance in visible range | YI Value |
|---|---|---|---|---|---|---|---|
| | Refractive Index of Material | | | | | | |
| | 1.74 | 1.67 | 1.60 | | | | |
| 1 | 1.17 mm | | | 1.17 | 7.36 | 86.51 % | 2.59 |
| 2 | 0.49 mm | 0.66 mm | | 1.15 | 9.56 | 87.84 % | 2.33 |

(continued)

| Sample Lens | Material Constitution and Layer Thickness of Lens | | Total Center Thickness | UV Transmittance at 400 nm | Luminous Transmittance in visible range | YI Value |
|---|---|---|---|---|---|---|
| | Refractive Index of Material | | | | | |
| 3 | 0.49 mm | 0.67 mm | 1.16 | 9.80 | 88.88 % | 2.13 |

Sample lens 1 has a refractive index of 1.74, of which the refractive index is on the highest level of high-refractivity plastic lenses now available on the market. However, the lenses formed of the high-refractivitymaterial are problematic in their weather resistance, and a large amount of UV absorbent is therefore added to the material for improving the weather resistance thereof. As a result, the lenses could absorb almost all UV rays up to 400 nm, or that is, they are extremely high-precision UV-absorbent lenses that transmit only about 7 % UV rays at 400 nm. In addition, since the material is thioepisulfide resin (HIE), it requires long-time polymerization at high temperature. Moreover, since such a large amount of UV absorbent is added to it for improving the weather resistance of the material, the influence of such high-temperature polymerization on the lenses is significant and the yellowness index (YI value) of the lenses is thereby increased. Concretely, the YI value of sample lens 1 is 2.59. In addition, since the material has such a high YI value and it is a high-refractivity material, the lenses formed of it have a large surface reflectance. Concretely, the luminous transmittance of the sample lens in a visible light range is 86.51 %. The luminous transmittance of plastic lenses of ordinary diethylene glycol bisallylcarbonate is around 90 %, and the YI value thereof is at most 1.0.

Sample lens 2 is better than sample lens 1 in point of the YI value and the luminous transmittance thereof. As so mentioned hereinabove, sample lens 2 was constructed by bonding a 0. 66 mm-thick layer of urethane resin having a refractive index of 1.67, which is lower than that of the base resin for the intermediate, to the convex face of the intermediate having a refractive index of 1.74, in a mode of polymerization bonding. In this, since the refractive index of the polymerization-bonding material is lower than that of the base material, the surface reflectance of the bonded lens lowers, and in addition, since the YI value thereof is also lower than that of the base material, the luminous transmittance of the bonded lens is 87.84 % and the YI value thereof was 2.33. Sample lens 3 was constructed by bonding the urethane resin having a further lower refractive index to the intermediate in a mode of polymerization bonding, and therefore this is still more better than sample lens 2 in point of the luminous transmittance and the YI value thereof.

As in this embodiment, a high-refractivity material lens has an increased YI value and an increased surface reflectance. When a layer having a predetermined uniform thickness of an additional lens material, of which the refractive index is lower than that of a base material of high refractivity, is bonded to the surface of a lens of the base material in a-mode of polymerization bonding, then the bonded lens are better than the high-refractivity material lens in point of the YI value and the luminous transmittance thereof. This embodiment of the invention provides lenses with high added value that look very good with high transparency. The polymerization bonding of a different material to the intermediate of a high-refractivity material to form a layer having a predetermined thickness on the intermediate is not limited to any one of the convex face or the concave face of the substrate, but, as the case may be, may be to both the two faces thereof for further improving the function of the resulting lenses.

[Example 5]

This is to demonstrate an example of bonding a material capable of preventing interference fringes to the surface of a lens of a material that may form many interference fringes, in a mode of polymerization bonding.

In general, when a thin film such as hard coat is applied to the surface of a lens of a high-refractivity material, then it often forms interference fringes. This is because the thickness of the thin film formed on the lens surface is uneven. Another reason is because, when a lens is formed of a high-refractivity material and when its surface is coated with a hard coat film, the difference in the refractivity between the hard coat film and the lens material is great. To solve the problems, the following may be taken into consideration. One is to use a spin coater in forming the thin film to thereby make the thin film have a uniform thickness; and the other is to add fine particles of metal oxide to the hard coat liquid in order that the refractive index of the hard coat film could be nearer to that of the lens material. However, the spin coater is unfavorable for mass-production of lenses for stock. On the other hand, when fine particles of metal oxide are added to the hard coat liquid, then it may lower the weather-resistant adhesiveness between the lens surface and the hard coat film and the hard coat film will be readily peeled. Given that situation, we, the present inventors have found out a solution of the problems to prevent the formation of interference fringes by making the refractive index of the surface of the high-refractivity lens nearer to that of the hard coat layer rather than increasing the refractivity of the hard coat liquid.

Two pairs of female and male glass molds having the same radius of curvature were prepared. One pair of the two was combined to have a center gap of 0.6 mm and sealed up with an adhesive tape at their peripheries, while the other was to have a center gap of 1 mm and sealed up in the same manner. Two shells were thus constructed with a cavity formed therein. An episulfide resin monomer (HIE) was filled into the cavity of each shell and thermally polymerized. Next, the male and female molds were both removed from one shell having a cavity center gap of 1 mm to obtain a high-refractivity lens having a center thickness of 1 mm, a refractive index of 1.74 and a power of -4.00 D. Only the female glass mold was removed from the other shell having a center gap of 0.6 mm to obtain an intermediate, but the male mold was still kept stuck to the intermediate.

Next, the removed female mold was again attached to the intermediate in such a manner that the distance between the center part of the mold and the center part of the convex face of the intermediate could be 0.4 mm, and this was sealed up with an adhesive tape at the peripheries of the molds. A shell was thus constructed with a cavity formed therein. A monomer for urethane resin (MR-8) having a refractive index of 1.60 was filled into the cavity and thermally polymerized, and then both the female mold and the male mold were removed to obtain a lens. In the lens, concretely, a 0.4 mm-thick uniform layer of a resin of the monomer having a refractive index of 1.60 was bonded to the convex face of the intermediate having a refractive index of 1. 74 and a center thickness of 0.6 mm, in a mode of polymerization bonding.

These lenses were dipped in a hard coat liquid having a refractive index of 1.62 and thermally polymerized to form a hard coat layer thereon. The convex face of each lens was observed with a zircon lamp. No interference fringe was seen in the polymerization-bonded lens, and the lens was good and transparent. On the other hand, however, the lens formed of the episulfide resin alone had many interference fringes, and its appearance was not good. The two lenses were the same in point of their shape, having the same edge thickness and the same center thickness.

Table 3 shows the result of polymerization bonding test of various optical materials. Based on the data given in this Table, suitable materials may be selected for fabricating inexpensive half-finished lenses at low costs. However, the resin materials usable in the invention are not limited to those shown in Table 3, and any other combinations that satisfy the optical properties for lenses and the polymerization bondability to each other are employable in the invention.

[Table 3]

| | | | Non-polymerized Material | | | | | |
|---|---|---|---|---|---|---|---|---|
| Polymerized Material | Type of Resin | Trade Name | MR6 monomer | MR7 monomer | MR8 monomer | HIE monomer | CR39 monomer | MMA monomer |
| | Urethane Resin | MR6 | O | O | O | O | x | x |
| | Urethane Resin | MR7 | O | O | O | O | x | x |
| | Urethane Resin | MR8 | O | O | O | O | x | x |
| | Epoxy Resin | HIE | O | O | O | O | x | x |
| | Allyl Resin | CR39 | O | O | O | x | x | x |
| | Polycarbonate Resin | PC | O | O | O | x | cloudy | cloudy |
| | Acrylic Resin | PMMA | x | x | x | x | O | O |

Notes:   O: Even when pinched with a vise, the components firmly adhered to each other.
x: When pinched with a vise, the polymerization-bonded part was peeled.
Cloudy: The polymer from the monomer was cloudy.

In Table 3, MR-6, 7, 8 are all trade names of Mitsui Chemical's urethane resin products; HIE is a trade name of Mitsui Chemical's episulfide resin product; CR-39 is PPG's diethylene glycol bisallylcarbonate; PC is polycarbonate resin; and PMMA is polymethyl methacrylate resin.

INDUSTRIAL APPLICABILITY

The resin lenses of the invention may be used as high-quality lenses for glasses. According to the method of the invention, such high-quality lenses for glasses may be provided at low costs.

Specifically, according to the invention, resins that differ in their optical properties or in any other physical properties and/or chemical properties thereof may be combined and integrated to provide lenses of good quality that may cover up the unsatisfactory properties of the individual resins. The different resin materials may bond to each other in the step of polymerization to give lenses. In particular, the lenses of the invention do not require any optical adhesive or primer, and therefore do not require any special attention to be paid to the optical properties in the bonded area of lenses.

Claims

1.  A method for producing a resin lens having a refractive index of at least 1.45 by employing at least two different types of resin material (3a, 5a), the method comprising:

    processing at least one (3a) of said different types of resin material into a non-flowable shaped body (3) not having the properties of a finished lens;
    forming a cavity (6b) on one bonding face of the shaped body (3), casting the other one (5a) of said different types of resin material whose properties differ from that of the material of the shaped body into the cavity and polymerizing and curing it in the cavity to obtain a molded resin article (11) of said at least two different types of resin material (3a, 5a) airtightly integrated with each other; and
    processing the article (11) into a lens,

    **characterized in that** said different types of resin material (3a, 5a) include episulfide resin as a first type of resin material and, as a second type of resin material, a material which has at least one of the following properties (a) to (d):

    (a) it is tintable,
    (b) it causes less faults of burrs and cracks in machining than the episulfide resin;
    (c) it has an impact resistance higher than that of the episulfide resin; and
    (d) it has a refractivity lower than that of the episulfide resin.

2.  The method of claim 1, wherein said different types of resin material (3a, 5a) include urethane resin as one type of resin material.

Patentansprüche

1.  Verfahren zum Herstellen einer Harzlinse mit einem Brechungsindex von wenigstens 1,45, indem wenigstens zwei verschiedene Harzmaterialarten (3a, 5a) verwendet werden, wobei in dem Verfahren
    wenigstens eine (3a) der verschiedenen Harzmaterialarten in einen nicht-fließfähig geformten Körper (3) verarbeitet wird, der nicht die Eigenschaften einer fertigen Linse aufweist,
    ein Hohlraum (6b) auf einer Verbindungsseite des geformten Körpers (3) gebildet wird, die andere (5a) der verschiedenen Harzmaterialarten, deren Eigenschaften sich von dem Material des geformten Körpers unterscheiden, in den Hohlraum eingegossen wird, und in dem Hohlraum polymerisiert und ausgehärtet wird, um einen gegossenen Harzgegenstand (11) der wenigstens zwei unterschiedlichen Harzmaterialarten (3a, 5a) zu erhalten, die luftdicht miteinander verbunden sind, und
    der Gegenstand (11) in eine Linse verarbeitet wird,
    **dadurch gekennzeichnet, dass** die verschiedenen Harzmaterialarten (3a, 5a) Episulfidharz als eine erste Harzmaterialart, und als eine zweite Harzmaterialart ein Material aufweisen, das wenigstens eine der folgenden Eigenschaften (a) bis (d) aufweist:

    (a) es ist färbbar,
    (b) es verursacht beim Herstellen weniger Fehler durch Rillen und Risse als das Episulfidharz,
    (c) es hat eine größere Schlagfestigkeit als das Episulfidharz, und
    (d) es hat ein niedrigeres Brechungsvermögen als das Episulfidharz.

2.  Verfahren nach Anspruch 1, wobei die verschiedenen Typen von Harzmaterial (3a, 5a) Urethanharz als eine Harzmaterialart aufweisen.

Revendications

1.  Procédé pour produire une lentille en résine ayant un indice de réfraction d'au moins 1,45 en employant au moins deux types différents de matériau de résine (3a, 5a), le procédé comprenant les étapes consistant à :

    traiter au moins l'un (3a) desdits différents types de matériau de résine en un corps profilé non coulable (3) n'ayant pas les propriétés d'une lentille finie ;
    former une cavité (6b) sur une face de liaison du corps profilé (3), couler l'autre (5a) desdits différents types de matériau de résine dont les propriétés diffèrent de celles du matériau du corps profilé dans la cavité et polymériser et durcir celui-ci dans la cavité pour obtenir un article en résine moulé (11) desdits au moins deux types différents de matériau de résine (3a, 5a) intégrés les uns aux autres de manière étanche à l'air ; et traiter l'article (11) en une lentille,

**caractérisé en ce que** lesdits différents types de matériau de résine (3a, 5a) comprennent une résine épisulfure en tant que premier type de matériau de résine et, en tant que second type de matériau de résine, un matériau qui a au moins l'une des propriétés (a) à (d) suivantes :

    (a) il peut être teinté ;
    (b) il provoque moins de défauts de bavures et de fissures dans l'usinage que la résine épisulfure ;
    (c) il a une résistance aux impacts supérieure à celle de la résine épisulfure ; et
    (d) il a un indice de réfraction inférieur à celui de la résine épisulfure.

2. Procédé selon la revendication 1, dans lequel lesdits différents types de matériau de résine (3a, 5a) comprennent une résine uréthane en tant qu'un type de matériau de résine.

FIG. 1

(a)

(b)

(c)

(d)

(e)

(f)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 60205401 A
- JP 8216271 A
- EP 726138 A